# NEUE EUROPÄISCHE PATENTSCHRIFT

(11) **EP 1 043 530 B2**
(45) Veröffentlichungstag und Bekanntmachung des Hinweises auf die Entscheidung über den Einspruch: **02.09.2009**
(45) Hinweis auf die Patenterteilung: 08.06.2005
(21) Anmeldenummer: 00107448.3
(22) Anmeldetag: 06.04.2000
(51) Int. Cl.: F16L 3/01, H02G 11/00

(54) **Druckluftversorgungssytem**
Supply system for compressed air
Système d'alimentation d'air comprimé

(30) Priorität: 10.04.1999 DE 19916184
(43) Veröffentlichungstag der Anmeldung: 11.10.2000
(73) Patentinhaber: Rinke Druckluft GmbH, Entwicklung-Montagetechnik, 34355 Staufenberg (DE)
(72) Erfinder: Rinke, Otto, 34355 Staufenberg (DE)
(74) Vertreter: Walther, Walther & Hinz GbR

(56) Entgegenhaltungen:
- EP-A- 0 490 022
- DE-A- 4 322 195
- DE-U1- 29 802 278
- GB-A- 725 156
- GB-A- 819 862
- US-A- 2 720 217
- US-A- 3 014 494

## Beschreibung

Die vorliegende Erfindung betrifft ein Druckluftversorgungssystem mit einem Druckluftträger zur Verteilung von Druckluft an mehrere Verbraucher, mit einem linear verfahrbar angeordneten, mindestens einen Verbraucher haltenden Schlitten, und mit einem an dem Druckluftträger anschließbaren, in einem Führungselement geführten Druckluftschlauch, wobei der Druckluftschlauch bis auf das an dem Druckluftträger angeschlossene Ende zusammen mit dem Schlitten linear verfahrbar ist.

Aus der GB 725 156 ist eine Krananlage bekannt, bei der der Kranschlitten mit Versorgungsteitungen für Strom, Luft und Wasser versorgt wird, wobei ein Ende der Versorgungsleitungen am Schlitten gehalten ist, während das andere Ende der Versorgungsleitungen in ein entsprechendes Druckluftversorgungssystem am Boden mündet. Während der Bewegung des Kranschlittens werden die Versorgungsleitungen dadurch mitgeführt, dass diese in Form einer Schleife auf einer entsprechenden Halterung verlegt sind, wobei die der Drucklüftstation zugewandte Seite der Schleife unverändert in einer entsprechenden Führung liegt, während die dem Kranschlitten zugewandte Seite der Versorgungsleitungen mit diesem bewegt wird. Dabei werden die Versorgungsleitungen auf Rollen gelagert, so dass die Versorgungsleitungen mit einem geringen Widerstand mit dem Schlitten geführt werden können. An einer anderen Stelle der GB 725 156 ist beschrieben, dass das dem Kranschlitten zugewandte Ende der Schlaufe auch über eine einfache Schale gehalten werden kann, wobei die Versorgungsschläuche über die Oberfläche der Schale gleiten. Dies hat aber den großen Nachteil, dass aufgrund der hohen Reibung die Versorgungsleitungen nicht ordnungsgemäß geführt werden und häufig aus ihrer Führung herausspringen, was jeweils zu einer Betriebsstörung führt.

Aus der GB 819 862 ist ein Druckluftversorgungssystem bekannt, bei der eine Anzahl von Versorgungsleitungen zu einem Versorgungsstrang zusammengefasst sind. Auch hier ist ein Ende des Versorgungsstrangs fest an einer U-förmigen Halterung gehalten, während das andere Ende des Stranges beweglich in einer zweiten U-förmigen Halterung liegt. Im Übrigen bildet der Versorgungsstrang zwischen den beiden Halterungen eine Schleife aus, wobei ein Teil der die Schleife bildenden Versorgungsleitungen in der U-förmigen Halterung gleitet, wenn die Versorgungsleitung zwischen zwei Arbeitsstationen hin- und hergeschoben wird. Dabei liegt auf dem gleitenden Teil der Versorgungsleitungen das gesamte Gewicht der Schlaufe, weshalb die Versorgungsleitungen immer mal wieder aus der jeweiligen U-förmigen Führung herausgelangen und somit den gesamten Bewegungsprozess blockieren. Des Weiteren sind die Versorgungsleitungen so schwer, dass ein einfaches und schnelles Bewegen der gesamten Station von einem Arbeitsplatz zum nächsten nur schwer möglich ist.

Die gattungsgemäßen Druckluftversorgungssysteme werden beispielsweise an Fließbändern der Autohersteller eingesetzt, wobei der insbesondere als Druckluftschrauber ausgebildete Verbraucher über dem jeweiligen Montageplatz hängend und linear verschieblich angeordnet ist. Bei Bedarf kann der Verbraucher in Richtung des Fließbandes (und zurück) mitgeführt werden. Die Bewegungsfreiheit des Arbeiters, d.h. des Verbrauchers wird durch die Länge und die Anordnung des an ihm angeschlossenen Druckluftschlauches begrenzt.

Dabei ist der Druckluftträger so dimensioniert, dass er mit wenigen Aufhängepunkten an der Decke der Fabrikhalte oder dergleichen angehängt werden kann und sich im Übrigen selbst trägt. Hierdurch wird eine aufwendige Trägerkonstruktion überflüssig. Ein solcher selbsttragender Druckluftträger hat den Vorteil, dass darin ein so großer Druckluft-Kanal enthalten sein kann, dass dieser als Speicher für die Druckluft dient. Hierdurch wird einerseits ein aufwendiger Speicherkessel überflüssig und andererseits werden die Druckverluste im Druckluftversorgungssystem minimiert, da die Druckverluste bei steigendem Durchmesser des Druckluftkanals abnehmen und da der Speicher sehr viel näher am Verbraucher angeordnet ist, so dass große Übertragungswege entfallen.

Zur Erzielung einer größtmöglichen Bewegungsfreiheit des Arbeiters werden sowohl von der Firma Wampfler AG aus Weil am Rhein, DE, als auch von der Firma Besta AG aus Uster, CH, selbsttragende Druckluftverteilsysteme mit den eingangs genannten Merkmalen angeboten, bei denen der Druckluftschlauch in eine Energieführungskette eingebracht ist und zusammen mit dieser im Führungselement linear verfahren wird. Der in der Energiekette geführte Druckluftschlauch ist gegen Knicken geschützt und wird durch die Energiekette zuverlässig im Führungselement verfahren, ohne dass der Druckluftschlauch in unerwünschter Weise herausspringt.

Diese Energieketten sind kostenintensiv, verursachen Geräusche beim Aufund Abrollen und deren einzelne Kettenglieder kneifen die Gewebedecke des Druckluftschlauches und führen somit zu erhöhtem Verschleiß. Damit das Gesamtgewicht des üblicherweise an der Decke der Werkshalle montierten Druckluftversorgungssystem, und damit die Herstellungs- und Montagekosten, in vertretbaren Grenzen bleibt, werden die Energieketten so dimensioniert, dass gerade eben Druckluftschläuche mit einem lichten Durchmesser von 8 oder 10 mm darin aufgenommen werden können. Hierdurch ist aber die am Verbraucher zur Verfügung stehende Energie (Druckluft) begrenzt, selbst wenn in einer Energiekette zwei Druckluftschläuche geführt werden.

Damit diese Energiekette gegen unerwünschtes Verrutschen gesichert ist, wird sie mühsam am Führungselement angeschraubt. Im Falle eines Umbaus des Fließbandes ist hierdurch eine rasche Verstellung des Bewegungsbereiches des Verbrauchers nicht möglich, was zu erhöhten Umrüstkosten führt.

Davon ausgehend liegt der vorliegenden Erfindung die Aufgabe zugrunde ein Druckluftversorgungssystem zu schaffen, welches kostengünstig herzustellen und zu montieren ist und dennoch eine große Bewegungsfreiheit des Arbeiters, sowie einen hohen Energie- bzw. Drucklufttransport ermöglicht.

Dabei liegt der vorliegenden Erfindung die Erkenntnis zugrunde, dass die tragenden Teile des Druckluftversorgungssystems kleiner und kostengünstiger ausgelegt werden können, wenn dessen Eigengewicht gesenkt wird. Dieses führt auch zu einer einfacheren und damit kostengünstigeren Montage.

Als technische Lösung dieser Aufgabe wird ein Durchluftversorgungssystem mit den Merkmalen des Anspruchs 1 vorgeschlagen.

Ein nach dieser technischen Lehre ausgebildetes Druckluftversorgungssystem hat den Vorteil, dass auf eine Energiekette verzichtet werden kann, was zu einer erheblichen Gewichts- und Kostenreduzierung führt, da einerseits die Kosten für die Energiekette entfallen und da andererseits die tragenden Teile des Druckluftversorgungssystems aufgrund des Wegfalls der Energiekette entsprechend kleiner dimensioniert werden können. Ein aufgrund des Wegfalls der Energiekette kleiner ausgelegtes Führungselement verstärkt diesen Effekt noch.

Ein weiterer Vorteil besteht darin, dass durch den Wegfall der Energiekette bei gleichem Führungselement in diesem mehr Platz zur Verfügung steht, so dass gegebenenfalls ein dickerer Druckluftschlauch eingesetzt werden kann. Dies hat den Vorteil, dass am Verbraucher mehr Energie in Form von Druckluft zur Verfügung steht und dass die im Schlauch auftretenden Reibungsverluste verringert werden.

In einer bevorzugten Ausführungsform ist die Oberfläche des Druckluftschlauches aus Nylon, Perlon, Polypropylän, Polyester, Teflon, Kevlar, Polyurethan oder aus einer Kombination wenigstens zwei der vorgenannten Materialien ausgebildet. Diese Materialien haben den Vorteil, dass sich der Reibungswiderstand des Druckluftschlauches senkt, was das Gleiten des Schlauches im Führungselement begünstigt.

In einer vorteilhaften Weiterbildung wird dieser Effekt durch die Ausbildung einer profilierten Oberfläche des Druckluftschlauches noch verstärkt, insbesondere wenn über den Druckluftschlauch ein netzartiger Strumpf übergezogen ist. Durch das widerstandsarme Gleiten des Druckluftschlauches vorzugsweise in einer Kehle des Führungselementes wird ein einfaches Verschieben des bis zu 20 Meter langen Druckluftschlauches ermöglicht, ohne dass der Druckluftschlauch Wellen bildet, verkantet oder aus der Führung herausgerät.

Vorteilhafterweise wird der Druckluft-Kanal im Querschnitt rund ausgebildet, da hierdurch die Reibungsverluste weiter minimiert werden.

In einer weiteren, bevorzugten Ausführungsform ist am Druckluftträger ein C-, T-, U- oder I- förmiges Halteprofil zur verschiebbaren Aufnahme des Schlittens befestigt. Dieses Halteprofil weist eine eigene, nicht unerhebliche Steifigkeit auf. Bei einer Kombination von Halteprofil und Druckluftträger ergänzen sich beide derart, dass zur Erzielung einer für das gesamte Druckluftversorgungssystem ausreichenden Tragfähigkeit beispielsweise der Druckluftträger schwächer dimensioniert werden kann, was erneut zu einer Gewichts- und Kostenreduzierung führt.

Erfindungsgemäß ist das Führungselement als C-förmiges Profil ausgebildet. Dies hat den Vorteil, dass das Führungselement einfach und kostengünstig hergestellt werden kann, insbesondere wenn dieses vorzugsweise aus Blech gefalzt oder gebogen ist.

In einer anderen, besonders bevorzugten Ausführungsform sind am Druckluftträger in bestimmten Abständen voneinander Übergabeventile vorgesehen, die einzeln absperrbar sind. Hierdurch können einzelne Druckluft schläuche schnell und ohne großen Aufwand vom System abgenommen werden und an einem anderen Übergabeventil angebracht werden. Auch ist es hierdurch möglich, am Druckluftschlauch und am Übergabeventil schnell und einfach zu lösende Kupplungen anzubringen, so dass das Versetzen des Druckluftschlauches noch einfacher wird.

Weitere Vorteile des erfindungsgemäßen Druckluftversorgungssystems ergeben sich aus der beigefügten Zeichnung und den nachfolgend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:
- Fig. 1: eine perspektivische Ansicht eines Ausschnitt des Druckluftversorgungssystems;
- Fig. 2: eine geschnitten dargestellte Frontansicht des Druckluftversorgungssystems gemäß Fig. 1, geschnitten entlang Linie II - II in Fig. 1;
- Fig. 3: eine vergrößerte Darstellung des Druckluftschlauches des Druckluftversorgungssystems gemäß Fig. 1.

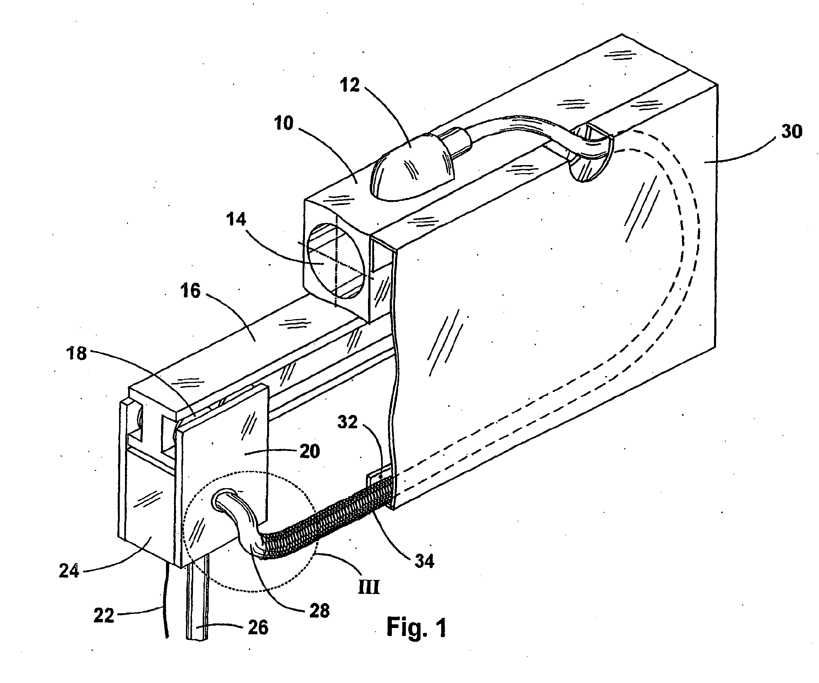

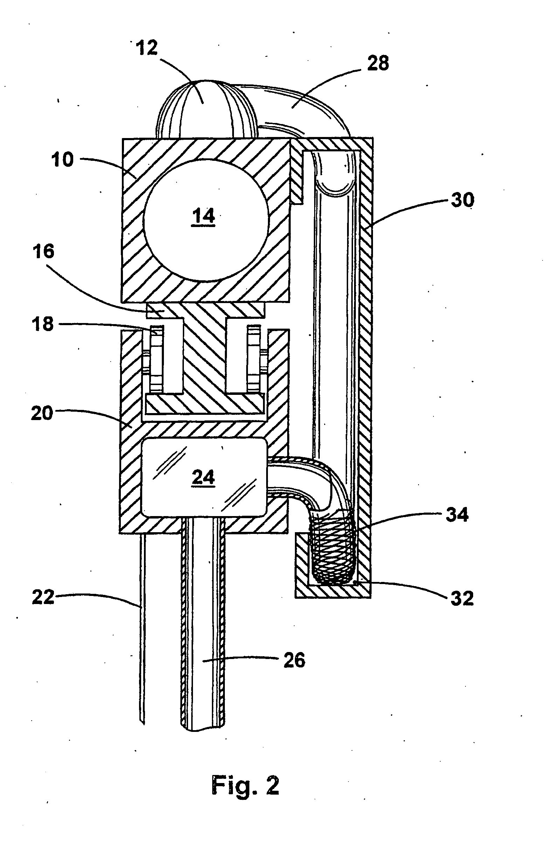

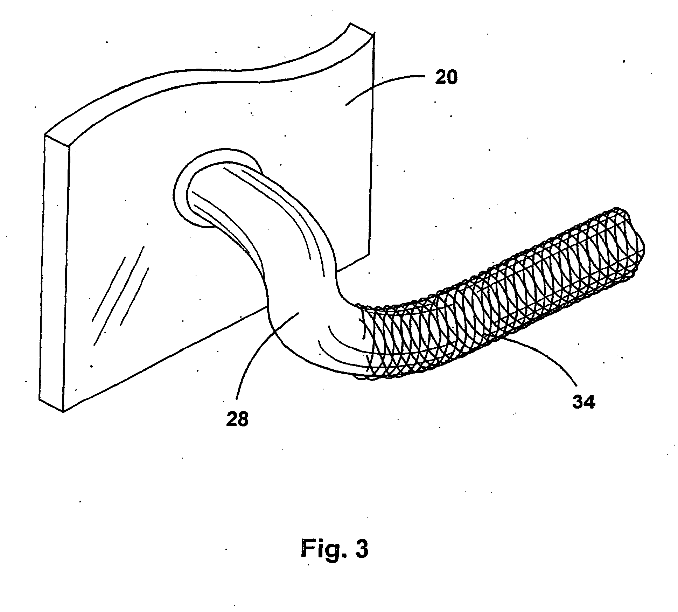

Das in den Figuren 1 bis 3 dargestellte Druckluftversorgungssystem wird beispielsweise bei Fließbandarbeitsplätzen eingesetzt, um Druckluft für die Bohrer, Schrauber oder andere Anwendungen bereitzustellen. Derartige Systeme werden üblicherweise oberhalb des Arbeitsplatzes angeordnet, um dem Arbeiter eine größtmögliche Bewegungsfreiheit zu geben. Hierzu zählt auch, dass das hier nicht näher dargestellte Werkzeug entlang des Fließbandes mitgeführt werden kann.

Das hier dargestellte Druckluftversorgungssystem umfaßt einen Druckluftträger 10 aus einem stranggegossenen Aluminiumprofil, an dessen Oberseite in regelmäßigen Abständen Übergabeventile 12 angeordnet sind.

Der Druckluftträger 10 weist im Inneren einen die eigentliche Druckluft führenden und als Rundbohrung ausgeführten Kanal 14 auf, der aufgrund seiner Größe auch zumindest teilweise die Funktion eines Druckluftspeichers übernimmt. Diese Druckluftträger 10 sind bis zu acht Meter lang und haben eine Kantenlänge von 6 cm bis 15 cm, bei einem Innendurchmesser des Kanales 14 von 5 cm bis 14 cm. Die einzelnen Druckluftträger 10 werden über an sich bekannte O-Ringe druckdicht miteinander verbunden und können so in jeder beliebigen Weise entlang des Fließbandes angelegt werden. Die Druckluftträger 10 sind aufgrund ihrer Dimensionierung und Ausführung als Aluminiumprofil selbsttragend und können an wenigen Anhängepunkten aufgehängt beispielweise unter die Hallendecke gehängt werden, so dass die an sich übliche Trägerkonstruktion entfällt. Aufgrund des sehr großen Kanales 14 kann ein Großteil der benötigten Druckluft hierin gespeichert werden, so dass der ansonsten übliche Druckluftspeicher ebenfalls entfällt und die Druckluft vor Ort gespeichert wird und hier verfügbar ist.

Unter dem Druckluftträger 10 ist ein I-förmiges Halteprofil 16 angebracht, in dem ein mit Rollen 18 versehener Schlitten 20 linear verschieblich gehalten ist. An dem Schlitten 20 ist ein Tragseil 22 angebracht, welches den hier nicht dargestellten Verbraucher, insbesondere einen Schrauber hängend hält. Der Schlitten 20 umfaßt ein Hohlkammerprofil 24, an dem abgangsseitig ein zum Verbraucher führender Druckluftschlauch 26 angeschlossen ist und an dem eingangsseitig ein vom Druckluftträger 10 kommender Druckluftschlauch 28 eintrifft.

Dieser Druckluftschlauch 28 wird einerseits am Übergabeventil 12 und andererseits am Hohlkammerprofil 24 angedockt. In einer bevorzugten Ausführungsform ist dieser Druckluftschlauch 28 6 Meter lang und erlaubt so dem Schlitten 20 eine Verfahrbarkeit von maximal 12 Metern, d.h. 6 Meter vor und 6 Meter zurück. Um ein Knicken, Verkanten oder Verheddern des Druckluftschlauches 28 zuverlässig zu vermeiden, wird dieser in einem Führungselement 30 derart geführt, dass der Druckluftschlauch 28 in einer Kehle 32 des Führungselementes 30 liegt. Dieses C-förmig aus Blech gebogene Führungselement 30 wird seitlich am Druckluftträger 10 angebracht und erstreckt sich ebenfalls nahezu über die gesamte Länge des Druckluftträgers 10. Dabei wird der Druckluftschlauch 28 von oben kommend mit einer Halbschlaufe verlegt und liegt mit seinem unteren Bereich in der Kehle 32 an. Am Ende des Druckluftschlauches 28 wird dieser wieder aus der Kehle 32 herausgeführt und in das Hohlkammerprofil 24 eingeführt, wobei der Anschluß an das Hohlkammerprofil oberhalb der Kehle 32 angeordnet ist.

Der Druckluftschlauch 28 ist mit einem netzartigen Nylonstrumpf 34 überzogen, um den Reibungswiderstand des auf dem Blech zu führenden Druckluftschlauches 28 zu reduzieren. Hierdurch ist es möglich, dass die am Verbraucher arbeitende Person beim Fortschreiten entlang des Fließbandes den Verbraucher mit sich führt und über das angeschlossene Tragseil 22 den Schlitten 20 mit bewegt. Dabei wird der am Schlitten 20 angeschlossene Druckluftschlauch 28 in dieselbe Richtung linear bewegt und verschiebt dementsprechend den in der Kehle liegenden Teil des Druckluftschlauches 28. Je nach Bewegungsrichtung wird hierbei die Halbschlaufe vergrößert oder verringert, in jedem Falle aber wird der Druckluftschlauch 28 präzise und zuverlässig geführt. Dabei hat es sich als vorteilhaft erwiesen, das Führungselement 30 mindestens so hoch auszuführen, wie der zulässige Biegeradius des Druckluftschlauches 28 es erfordert.

In einer anderen, hier nicht dargestellten Ausführungsform kann der Netzstrumpf 34 auch durch ein Profil auf der Oberfläche des Druckluftschlauches 28 ersetzt werden. Auch wäre es möglich die Oberfläche des Druckluftschlauches 28 durch eine geeignete Materialwahl besonders reibungsarm auszubilden. Dies kann beispielsweise durch Verwendung von Nylon, Perlon, Kevlar, Teflon, Polypropylän, Polyurethan oder einer Kombination hieraus geschehen.

Auf dem Druckluftträger 10 sind nach oben abgehend in regelmäßigen Abständen Übergabeventile 12 angeordnet, an denen der Druckluftschlauch 28 angedockt werden kann. Sollte es nun aus betrieblichen Gründen notwendig sein, dass Fließband umzugestalten, so kann dies durch einfaches Abdocken des Druckluftschlauches 28 und erneutes Andocken an ein anderes Übergabe-ventil 12 geschehen. Hierdurch werden die Umrüstzeiten auf ein Minimum reduziert.

In einer hier nicht dargestellten Ausführungsform ist im Übergabeventil ein Kugelventil vorgesehen, mit dem das Übergabeventil individuell abgesperrt werden kann. Außerdem ist der Druckschlauch mittels einer Schnellkupplung am Übergabeventil anschließbar, so dass der Schlauch mit einem Handgriff an- und abgedockt werden kann.

### Bezugszeichenliste:

- 10: Druckluftträger
- 12: Übergabeventil
- 14: Kanal
- 16: Halteprofil
- 18: Rollen
- 20: Schlitten
- 22: Trageseil
- 24: Hohlkammerprofil
- 26: Druckluftschlauch
- 28: Druckluftschlauch
- 30: Führungselement
- 32: Kehle
- 34: Netzstrumpf

## Patentansprüche

1. Oberhalb eines Arbeitsplatzes anordnenbares Druckluftversorgungssystem zur Bereitstellung von Druckluft für an dem Arbeitsplatz einzusetzende Verbraucher mit einem Druckluftträger (10) zur Verteilung von Druckluft an mehrere Verbraucher, wobei der Druckluftträger aus einem selbsttragendem Profil gebildet ist mit einem linear verfahrbar angeordneten, mindestens einen Verbraucher haltenden Schlitten (20), und mit einem an dem Druckluftträger (10) anschließbaren, in einem Führungselement (30) geführten Druckluftschlauch (28), wobei der Druckluftschlauch (28) bis auf das an dem Druckluftträger (10) angeschlossene Ende zusammen mit dem Schlitten (20) linear verfahrbar ist,
**dadurch gekennzeichnet,**
**dass** der Druckluftschlauch (28) mit einem netzartigen Strumpf (34) überzogen ist und dass zumindest ein Teil des mit dem Strumpf (34) überzogenen Druckluftschlauches (28) gleitend in einer Kehle (32) eines C-förmig ausgebildeten Führungselementes (30) gehalten ist.

2. Druckluftversorgungssystem nach Anspruch 1,
**dadurch gekennzeichnet,**
**dass** der Druckluftschlauch (28) eine Oberfläche aus Nylon, Perlon, Polypropylän, Teflon, Polyester, Kevlar, Polyurethan oder aus einer Kombination wenigstens zwei der vorgenannten Materialien aufweist.

3. Druckluftversorgungssystem nach einem der vorangehenden Ansprüche,
**dadurch gekennzeichnet,**
**dass** der Druckluftschlauch (28) eine profilierte Oberfläche aufweist.

4. Druckluftversorgungssystem nach einem der vorangehenden Ansprüche,
**dadurch gekennzeichnet,**
**dass** im Druckluftträger (10) ein im Querschnitt runder Kanal (14) ausgebildet ist.

5. Druckluftversorgungssystem nach einem der vorangehenden Ansprüche,
**dadurch gekennzeichnet,**
**dass** am Druckluftträger (10) ein C-, T-, U- oder I-förmiges Halteprofil (16) zur verschiebbaren Aufnahme des Schlittens (20) befestigt ist.

6. Druckluftversorgungssystem nach einem der vorangehenden Ansprüche,
**dadurch gekennzeichnet,**
**dass** das Führungselement (30) aus einem Blech gefalzt oder gebogen ist.

7. Druckluftversorgungssystem nach einem der vorangehenden Ansprüche,
**dadurch gekennzeichnet,**
**dass** am Druckluftträger (10) in bestimmten Abständen voneinander Übergabeventile (12) vorgesehen sind, die einzeln absperrbar sind.

## Claims

1. A compressed air supply system adapted to be disposed above a workplace for providing compressed air to a consumer utilized at said workplace, said compressed air supply system being provided with a compressed air carrier (10) for distributing compressed air to a plurality of consumers, said compressed air carrier being formed from a self-supporting profile, with a carriage (20) mounted so as to be linearly displaceable and carrying at least one consumer, and with a compressed air hose (28) guided in a guide means (30) and connectable to the compressed air carrier (10), the compressed air hose (28) being linearly displaceable together with the carriage (20) except for the end connected to the compressed air carrier (10),
**characterized in**
**that** the compressed air hose (28) is covered with a netlike sheath (34) and that at least a portion of the compressed air hose (28) covered with the sheath (34) is slidably retained in a groove (32) of a C-shaped guide means (30).

2. The compressed air supply system in accordance with claim 1,
**characterized in**
**that** the compressed air hose (28) comprises a surface made from nylon, Perlon, polypropylene, Teflon, polyester, Kevlar, polyurethane or from a combination of at least two of the afore mentioned materials.

3. The compressed air supply system in accordance with any of the afore mentioned claims,
**characterized in**
**that** the compressed air hose (28) comprises a profiled surface.

4. The compressed air supply system in accordance with any of the afore mentioned claims,
**characterized in**
**that** a channel (14) with a round cross-section is formed in the compressed air carrier (10).

5. The compressed air supply system in accordance with any of the afore mentioned claims,
**characterized in**
**that** a C-, T-, U- or I-shaped retaining profile (16) for slidably receiving the carriage (20) is secured to the compressed air carrier (10).

6. The compressed air supply system in accordance with any of the afore mentioned claims,
**characterized in**
**that** the guide means (30) is made of a folded or bent sheet metal.

7. The compressed air supply system in accordance with any of the afore mentioned claims,
**characterized in**
**that** individually closable delivery valves (12) are provided on the compressed air carrier (10) so as to be spaced a certain distance apart.

## Revendications

1. Système d'alimentation en air comprimé apte à être disposé au-dessus d'un poste de travail et destiné à fournir de l'air comprimé à des consommateurs destinés à être utilisés au poste de travail avec un contenant d'air comprimé (10) destiné à distribuer de l'air comprimé à plusieurs consommateurs, le contenant d'air comprimé étant formé à partir d'un profilé autoportant, avec un chariot (20) retenant au moins un consommateur et disposé de manière à pouvoir se déplacer linéairement, et avec un tuyau flexible à air comprimé (28) guidé dans un élément de guidage (30) et apte à être raccordé au contenant d'air comprimé (10), le tuyau flexible à air comprimé (28) étant apte à être déplacé linéairement conjointement au chariot (20) à l'exception de son extrémité raccordée au contenant d'air comprimé (10),
**caractérisé en ce**
**que** le tuyau flexible à air comprimé (28) est recouvert d'une gaine maillée (34) et qu'au moins une partie du tuyau flexible à air comprimé (28) recouvert de la gaine (34) est maintenue à coulissement dans une gorge (32) d'un élément de guidage (30) en C.

2. Système d'alimentation en air comprimé selon la revendication 1,
**caractérisé en ce**
**que** le tuyau flexible à air comprimé (28) comporte une surface en nylon, perlon, polypropylène, téflon, polyester, kevlar, polyuréthane ou en une combinaison d'au moins deux des matériaux précités.

3. Système d'alimentation en air comprimé selon l'une quelconque des revendications précédentes,
**caractérisé en ce**
**que** le tuyau flexible à air comprimé (28) comporte une surface profilée.

4. Système d'alimentation en air comprimé selon l'une quelconque des revendications précédentes,
**caractérisé en ce**
**qu'**un conduit (14) de section ronde est réalisé dans le contenant d'air comprimé (10).

5. Système d'alimentation en air comprimé selon l'une quelconque des revendications précédentes,
**caractérisé en ce**
**qu'**un profilé de retenue (16) en C, T, U ou I et destiné à recevoir à coulissement le chariot (20) est solidarisé au contenant d'air comprimé (10).

6. Système d'alimentation en air comprimé selon l'une quelconque des revendications précédentes,
**caractérisé en ce**
**que** l'élément de guidage (30) est réalisé en tôle pliée ou cintrée.

7. Système d'alimentation en air comprimé selon l'une quelconque des revendications précédentes,
**caractérisé en ce**
**que** des clapets de décharge (12) aptes à être fermés individuellement sont prévus à intervalles réguliers sur le contenant d'air comprimé (10).
